# EUROPEAN PATENT SPECIFICATION

(11) **EP 4 183 521 B1**
(45) Date of publication and mention of the grant of the patent: **08.05.2024**
(21) Application number: 22208078.0
(22) Date of filing: 17.11.2022
(51) Int. Cl.: B25B 23/14, G01L 3/10

(54) **IMPACT TOOL AND METHOD FOR MANUFACTURING OUTPUT BLOCK**
SCHLAGWERKZEUG UND VERFAHREN ZUR HERSTELLUNG EINES ABTRIEBSBLOCKS
OUTIL À PERCUSSION ET PROCÉDÉ DE FABRICATION DE BLOC DE SORTIE

(30) Priority: 19.11.2021 JP 2021188794; 20.09.2022 JP 2022149335
(43) Date of publication of application: 24.05.2023
(73) Proprietor: Panasonic Holdings Corporation, Osaka 571-8501 (JP)
(72) Inventor: MURAKAMI, Hiroaki, Osaka-shi, Osaka, 540-6207 (JP); SHIMIZU, Hidenori, Osaka-shi, Osaka, 540-6207 (JP); SAWANO, Fumiaki, Osaka-shi, Osaka, 540-6207 (JP)
(74) Representative: Müller-Boré & Partner Patentanwälte PartG mbB

(56) References cited:
- EP-A1- 0 609 463
- EP-A1- 1 439 035
- EP-A1- 2 607 020
- EP-A1- 3 299 786
- JP-A- 2013 215 884
- JP-A- 2021 070 108
- US-A- 5 321 985
- US-A- 5 589 645
- US-A1- 2002 020 538
- US-A1- 2007 103 104

## Description

### Technical Field

The present disclosure generally relates to an impact tool and a method for manufacturing an output block. More particularly, the present disclosure relates to an impact tool including a hammer and an output block including an anvil claw, against which the hammer collides, and a method for manufacturing an output block for use in such an impact tool.

### Background Art

JP 2021-070108 A discloses the preamble of claims 1 and 5 and an electric tool (impact tool), which includes a motor, an impact mechanism, an output shaft, and a torque measuring unit. The impact mechanism receives motive power from the motor and thereby generates impacting force. The output shaft holds a tip tool thereon. The impact mechanism includes a hammer and an anvil. The output shaft is subjected by the impact mechanism to rotational impact around an axis. The torque measuring unit measures, as measured torque, the torque applied to the output shaft. The torque measuring unit may be, for example, a magnetostrictive strain sensor (magnetostrictive sensor) with the ability to detect torsional strain.

In the electric tool of JP 2021-070108 A, the impact caused through the impact operation, involving generation of rotational impact, by the impact mechanism places load on an output block (which includes the anvil in this case). Thus, the output block is sometimes required to have its mechanical strength increased sufficiently to withstand such impact.

### Summary of Invention

It is therefore an object of the present disclosure to provide an impact tool including a magnetostrictive sensor and an output block, of which the mechanical strength is increased sufficiently for the output block to withstand the impact caused by an impact operation, and also provide a method for manufacturing an output block for use in such an impact tool.

An impact tool according to an aspect of the present disclosure includes a motor, an output block, a hammer, and a magnetostrictive sensor. The output block holds a tip tool thereon. The hammer receives motive power from the motor and collides against the output block. The magnetostrictive sensor includes a magnetostrictive member and a coil portion covering the magnetostrictive member. The hammer includes a hammer body and a hammer claw connected to the hammer body. The output block includes a claw block and a body block. The claw block includes an anvil claw, against which the hammer claw collides. The claw block has been subjected to quenching treatment. The body block includes a thermally sprayed portion and is coupled to the claw block. The thermally sprayed portion includes, on a surface thereof, the magnetostrictive member made of a magnetostrictive material.

A method for manufacturing an output block according to another aspect of the present disclosure is designed to manufacture an output block for use in an impact tool to hold a tip tool thereon. The output block includes: a claw block including an anvil claw; and a body block. The method includes a first step, a second step, and a third step. The first step includes subjecting the claw block to quenching treatment. The second step includes thermally spraying a magnetostrictive material onto a surface of a thermally sprayed portion that forms a predetermined part of the body block and thereby forming a magnetostrictive member on the surface. The third step includes coupling the body block and the claw block to each other after the first step and the second step have been performed.

### Brief Description of Drawings

FIG. 1 is an exploded perspective view of an output block for an impact tool according to a first embodiment as viewed obliquely from behind the output block;
FIG. 2 is an exploded perspective view of the output block for the impact tool as viewed obliquely from in front of the output block;
FIG. 3 is an exploded perspective view of the output block, a hammer, and a transmission shaft of the impact tool;
FIG. 4 is a side cross-sectional view of the impact tool;
FIG. 5 is a side cross-sectional view of a main part of the impact tool;
FIG. 6 is a flowchart showing the procedure of a method for manufacturing an output block for the impact tool;
FIG. 7 is an exploded perspective view of an output block for an impact tool according to a second embodiment as viewed obliquely from behind the output block; and
FIG. 8 is a flowchart showing the procedure of a method for manufacturing an output block for the impact tool.

### Description of Embodiments

Exemplary embodiments of an impact tool and method for manufacturing an output block according to the present disclosure will now be described with reference to the accompanying drawings. Note that the embodiments to be described below are only exemplary ones of various embodiments of the present disclosure and should not be construed as limiting. Rather, the exemplary embodiments may be readily modified in various manners depending on a design choice or any other factor without departing from the scope of the present disclosure. The drawings to be referred to in the following description of embodiments are all schematic representations. Thus, the ratio of the dimensions (including thicknesses) of respective constituent elements illustrated on the drawings does not always reflect their actual dimensional ratio.

### (First embodiment)

### (Overview)

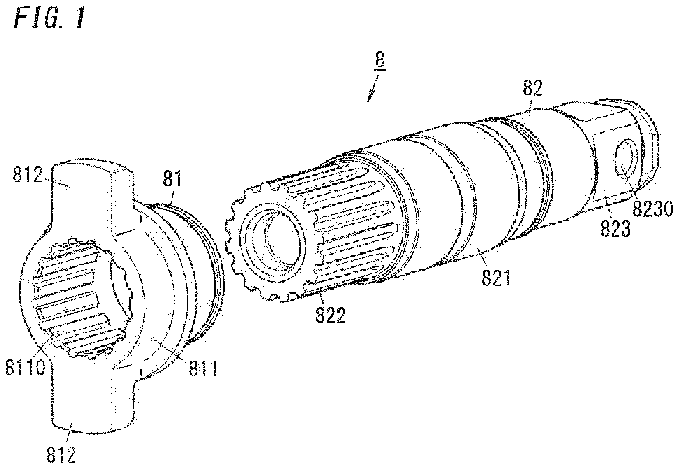

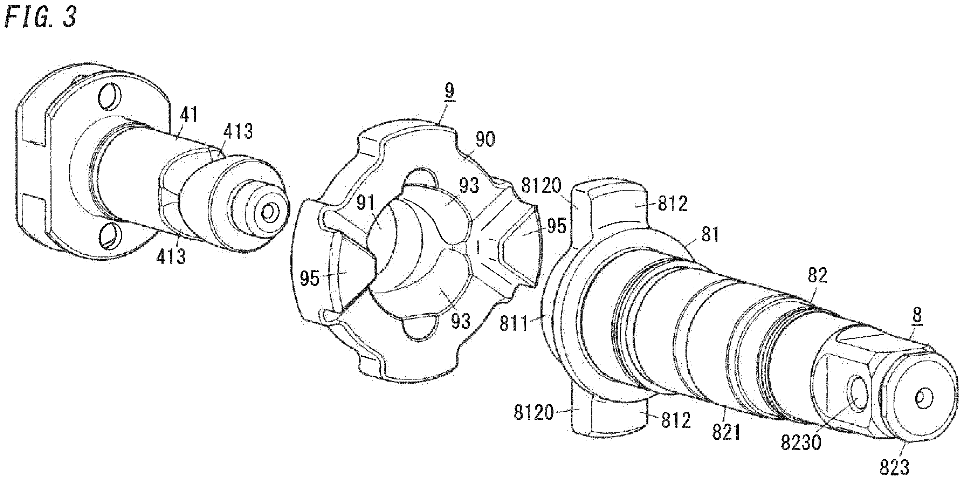

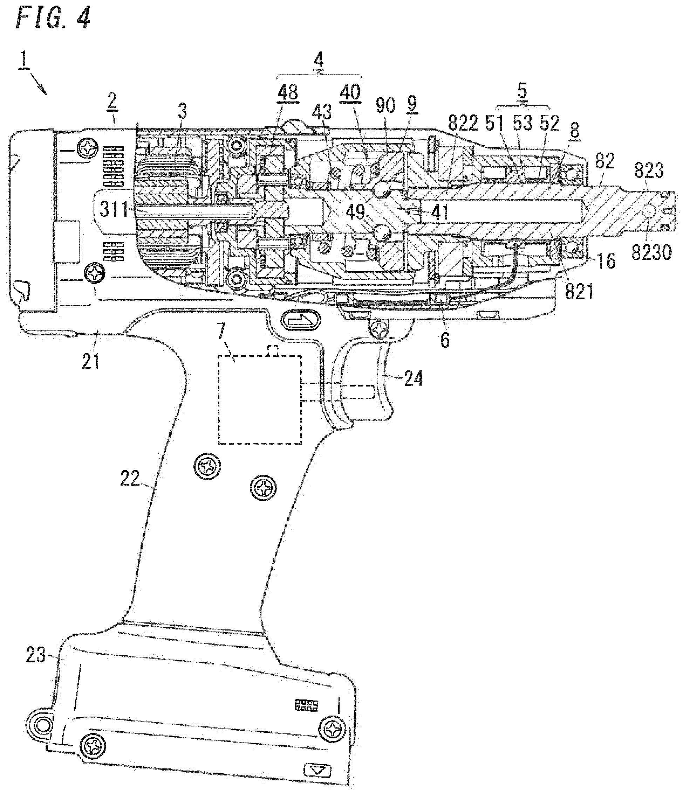

As shown in FIGS. 1 and 4, an impact tool 1 according to an exemplary embodiment includes a motor 3, an output block 8, a hammer 9, and a magnetostrictive sensor 5. The output block 8 holds a tip tool thereon. The hammer 9 receives motive power from the motor 3 and collides against the output block 8. The magnetostrictive sensor 5 includes a magnetostrictive member 51 and a coil portion 52 covering the magnetostrictive member 51. The hammer 9 includes a hammer body 90 and a hammer claw 95 (see FIG. 3) connected to the hammer body 90. The output block 8 includes a claw block 81 and a body block 82. The claw block 81 includes an anvil claw 812, against which the hammer claw 95 collides. The claw block 81 has been subjected to quenching treatment. The body block 82 includes a thermally sprayed portion 821 and is coupled to the claw block 81. The thermally sprayed portion 821 includes, on a surface thereof, the magnetostrictive member 51 made of a magnetostrictive material.

If the claw block 81 and the body block 82 were formed as a single integral member, then not only the body block 82 but also the claw block 81 would be heated while the magnetostrictive material is being thermally sprayed, thus possibly lessening the effect of increasing the impact resistance of the claw block 81 to be achieved by the quenching treatment. In contrast, according to this embodiment, the claw block 81 and the body block 82 are provided as two separate members, thus enabling maintaining the impact resistance of the claw block 81.

Thus, this embodiment enables forming a magnetostrictive member 51 on the thermally sprayed portion 821 of the body block 82 and increasing the impact resistance of the claw block 81 by quenching treatment at the same time. That is to say, this enables providing an impact tool 1 including a magnetostrictive sensor 5 and an output block 8, of which the mechanical strength is increased sufficiently for the output block 8 to withstand the impact caused by an impact operation.

In addition, this impact tool 1 may make the magnetostrictive sensor 5 measure torque and control the motor 3 based on the torque thus measured.

### (Details)

### (1) Structure

In the following description, a direction in which the claw block 81 of the output block 8 and a tip portion 823 thereof (to be described later) are arranged side by side will be hereinafter defined as a "forward/backward direction" with the tip portion 823 supposed to be located forward of the claw block 81 and with the claw block 81 supposed to be located backward of the tip portion 823. Also, in the following description, a direction in which a barrel 21 and a grip 22 (to be described later) are arranged one on top of the other will be hereinafter defined as an "upward/downward direction" with the barrel 21 supposed to be located upward of the grip 22 and with the grip 22 supposed to be located downward of the barrel 21. Nevertheless, these definitions should not be construed as limiting the directions in which the impact tool 1 is supposed to be used.

The impact tool 1 according to this embodiment is a portable electric tool. As shown in FIG. 4, the impact tool 1 includes a housing 2, the motor 3, a transmission mechanism 4, an operating member 24, the magnetostrictive sensor 5, a circuit section 6, and a control unit 7. The transmission mechanism 4 includes the output block 8 and the hammer 9.

The housing 2 houses the motor 3, the transmission mechanism 4, the magnetostrictive sensor 5, the circuit section 6, and the control unit 7. The housing 2 includes the barrel 21, the grip 22, and an attachment 23. The barrel 21 has a circular cylindrical shape. The grip 22 protrudes from the barrel 21. More specifically, the grip 22 protrudes from a side surface of the barrel 21. A tip portion, opposite from the portion connected to the barrel 21, of the grip 22 is connected to the attachment 23.

A rechargeable battery pack is attached removably to the attachment 23. The impact tool 1 is powered by the battery pack. That is to say, the battery pack is a power supply that supplies a current for driving the motor 3. In this embodiment, the battery pack is not a constituent element of the impact tool 1. However, this is only an example and should not be construed as limiting. Alternatively, the impact tool 1 may include the battery pack as one of constituent elements thereof. The battery pack includes an assembled battery formed by connecting a plurality of secondary batteries (such as lithium-ion batteries) in series and a case in which the assembled battery is housed.

The operating member 24 protrudes from the grip 22. The operating member 24 accepts an operating command for controlling the rotation of the motor 3. As used herein, "the rotation of the motor 3" refers to the rotation of a drive shaft 311 of the motor 3. The ON/OFF states of the motor 3 may be switched by pulling the operating member 24. In addition, the rotational velocity of the motor 3 is adjustable by the manipulative variable indicating how deep the operating member 24 has been pulled. Specifically, the greater the manipulative variable is, the higher the rotational velocity of the motor 3 becomes. Besides, according to the manipulative variable indicating how deep the operating member 24 has been pulled, the control unit 7 also makes the motor 3 start or stop running and controls the rotational velocity of the motor 3 as well.

The tip tool is held by the output block 8. More specifically, the tip tool is attachable to, and removable from, the output block 8. In this embodiment, the tip tool is attached to the output block 8 via a chuck. However, this is only an example and should not be construed as limiting. Alternatively, the tip tool may be directly attached to the output block 8.

The output block 8 receives motive power from the motor 3 to rotate along with the tip tool. As the rotational velocity of the motor 3 is controlled by operating the operating member 24, the rotational velocity of the tip tool is also controlled.

In this embodiment, the tip tool is not a constituent element of the impact tool 1. Nevertheless, the impact tool 1 may include the tip tool as one of constituent elements thereof.

The tip tool may be, for example, a screwdriver bit. The tip tool is fitted into a fastening member as a work target (such as a bolt or a screw). The work of tightening or loosening the screw may be performed by turning the tip tool that is fitted into the screw.

The motor 3 according to this embodiment may be, for example, a brushless motor. Also, the motor 3 according to this embodiment is a servomotor. The torque and rotational velocity of the motor 3 vary under the control of the control unit 7 (which is a servo driver). More specifically, the control unit 7 controls the operation of the motor 3 by feedback control for bringing the torque and rotational velocity of the motor 3 closer toward target values. In addition, the control unit 7 may control the operation of the motor 3 based on the torque detected by the magnetostrictive sensor 5.

The transmission mechanism 4 includes an impact mechanism 40. The impact tool 1 according to this embodiment is an electric impact screwdriver for fastening a screw while performing an impact operation using the impact mechanism 40. During the impact operation, the impact mechanism 40 generates impacting force based on the motive power of the motor 3 and applies the impacting force to the tip tool.

The transmission mechanism 4 preferably includes not only the impact mechanism 40 but also a planetary gear mechanism 48. The impact mechanism 40 includes a transmission shaft 41, the hammer 9, a return spring 43, the output block 8, and two steel spheres 49. The rotational power of the drive shaft 311 of the motor 3 is transmitted to the transmission shaft 41 via the planetary gear mechanism 48. The transmission mechanism 4 transmits the torque of the motor 3 to the output block 8 via the transmission shaft 41. The transmission shaft 41 is interposed between the motor 3 and the output block 8.

The hammer 9 is made of a metallic material. The hammer 9 moves relative to the output block 8 and applies impacting force to the output block 8 upon receiving motive power from the motor 3. As shown in FIG. 3, the hammer 9 includes a hammer body 90 and two hammer claws 95. The hammer body 90 has a disk shape. The two hammer claws 95 protrude from the front surface of the hammer body 90. The hammer body 90 has a through hole 91 to pass the transmission shaft 41 therethrough.

The hammer body 90 has two grooves 93 on an inner peripheral surface of the through hole 91. The transmission shaft 41 has a circular columnar shape. The transmission shaft 41 has two grooves 413 on an outer peripheral surface thereof. The two grooves 413 are connected to each other. The two steel spheres 49 (see FIG. 4) are sandwiched between the two grooves 93 and two grooves 413. The two grooves 93, the two grooves 413, and the two steel spheres 49 together form a cam mechanism. While the two steel spheres 49 are rolling, the hammer 9 may move along the axis of the transmission shaft 41 with respect to the transmission shaft 41 and rotate with respect to the transmission shaft 41. As the hammer 9 moves either forward or backward along the axis of the transmission shaft 41, the hammer 9 rotates with respect to the transmission shaft 41.

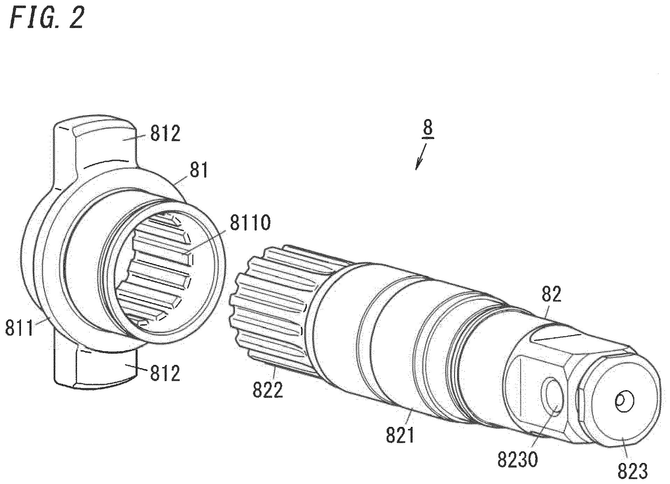

The output block 8 is made of a metallic material. As shown in FIGS. 1-3, the output block 8 includes the claw block 81 and the body block 82. The claw block 81 corresponds to a so-called "anvil" of the impact tool 1. The claw block 81 includes a first coupling portion 811 and two anvil claws 812. The body block 82 includes the thermally sprayed portion 821, a second coupling portion 822, and the tip portion 823.

The first coupling portion 811 has a circular cylindrical shape. That is to say, the first coupling portion 811 has a through hole as its center hole. The first coupling portion 811 is a boss having a through hole, of which the inner surface has a gear-shaped groove portion 8110 to be fitted into a spline shaft.

The two anvil claws 812 protrude from the first coupling portion 811 to extend along the radius of the first coupling portion 811. One of the two anvil claws 812 protrudes toward the opposite end from the other anvil claw 812. The anvil claws 812 are located in front of, and faces, the hammer body 90.

The thermally sprayed portion 821 of the body block 82 has a circular columnar shape in appearance. The surface of the thermally sprayed portion 821 is covered with the magnetostrictive member 51 (see FIG. 4). Note that in FIGS. 1-3, illustration of the magnetostrictive member 51 is omitted. The axis of the thermally sprayed portion 821 is aligned with the forward/backward direction. A first end (rear end) of the thermally sprayed portion 821 is connected to the second coupling portion 822. A second end (front end) of the thermally sprayed portion 821 is connected to the tip portion 823.

The second coupling portion 822 is coupled to the first coupling portion 811. The second coupling portion 822 is a spline shaft to be fitted into the groove portion 8110 of the first coupling portion 811. The second coupling portion 822 has a generally circular columnar shape. When taken along a plane intersecting at right angles with the center axis of the second coupling portion 822, the second coupling portion 822 has a gear shape.

The tip portion 823 has a circular columnar shape in appearance. The tip portion 823 has a through hole 8230 to be coupled to the chuck.

As shown in FIG. 3, the body block 82 is coupled to the claw block 81, thus making the thermally sprayed portion 821 protruding forward from the claw block 81.

More specifically, the second coupling portion 822 of the body block 82 is passed through the center through hole of the first coupling portion 811 to be fitted into the groove portion 8110. In this manner, the second coupling portion 822 is coupled to the first coupling portion 811. That is to say, the body block 82 is coupled to the claw block 81.

The body block 82 and the claw block 81 are preferably coupled to each other by press fitting. This may reduce the backlash between the body block 82 and the claw block 81, thus cutting down the energy transfer loss between the body block 82 and the claw block 81. As a result, this makes it easier to express the impact received by the claw block 81 from the hammer 9 as a strain of the magnetostrictive member 51 provided for the body block 82, thus contributing to increasing the sensitivity of the magnetostrictive sensor 5.

In addition, the first coupling portion 811 and the second coupling portion 822 have a spline shape, thus allowing the claw block 81 and the body block 82 to be firmly coupled to each other.

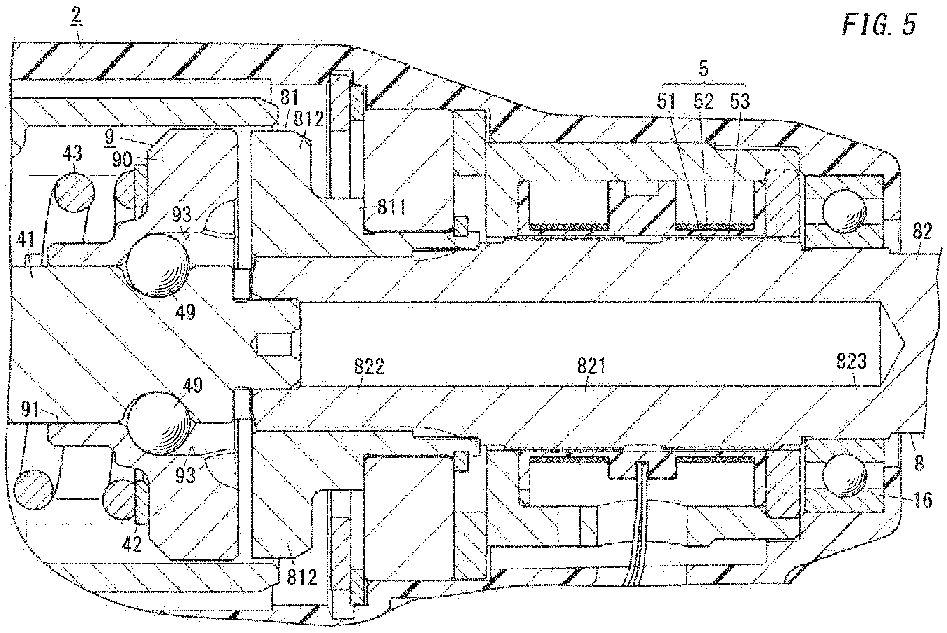

As shown in FIGS. 4 and 5, the return spring 43 is disposed behind the hammer 9. The return spring 43 according to this embodiment is a conical coil spring. The hammer 9 receives forward biasing force from the return spring 43. The hammer 9 may rotate with respect to the return spring 43. The impact mechanism 40 further includes a ring 42 interposed between the hammer 9 and the return spring 43.

While the impact mechanism 40 is performing no impact operation, the hammer 9 and the output block 8 rotate along with each other with the two hammer claws 95 of the hammer 9 and the two anvil claws 812 of the output block 8 kept in contact with each other in the rotational direction of the transmission shaft 41. Thus, at this time, the transmission shaft 41, the hammer 9, and the output block 8 rotate along with each other.

When a torque condition on the magnitude of the torque applied to the body block 82 of the output block 8 (hereinafter referred to as "load torque") is satisfied, the impact mechanism 40 starts performing an impact operation. The impact operation is an operation of applying impacting force from the hammer 9 to the output block 8. In this embodiment, the torque condition is a condition that the load torque become equal to or greater than a predetermined value. That is to say, as the load torque increases, the proportion of a force component having a direction that causes the hammer 9 to retreat increases with respect to the force generated between the hammer 9 and the output block 8. When the load torque increases to the predetermined value or more, the hammer 9 retreats while compressing the return spring 43. In addition, as the hammer 9 retreats, the hammer 9 rotates while the two hammer claws 95 of the hammer 9 are going over the two anvil claws 812 of the output block 8. Thereafter, the hammer 9 advances upon receiving recovery force from the return spring 43. Then, when the transmission shaft 41 goes approximately half around, the two hammer claws 95 of the hammer 9 collide against the side surface 8120 of the two anvil claws 812 of the output block 8. In this impact mechanism 40, every time the transmission shaft 41 goes approximately half around, the two hammer claws 95 of the hammer 9 collide against the two anvil claws 812 of the output block 8. That is to say, every time the transmission shaft 41 goes approximately half around, the hammer 9 applies impacting force (rotational impacting force) to the output block 8.

As can be seen, in this impact mechanism 40, collisions between the hammer 9 and the output block 8 occur repeatedly. The torque caused by these collisions allows the screw to be fastened more tightly than in a situation where no collisions occur between the hammer 9 and the output block 8.

As shown in FIG.4, the impact tool 1 further includes a bearing 16. The bearing 16 is housed in the housing 2. The bearing 16 is in contact with the body block 82 of the output block 8. More specifically, the bearing 16 is in contact with a part, located forward of the thermally sprayed portion 821, of the body block 82 (i.e., in contact with the tip portion 823). The bearing 16 holds the output block 8 rotatably.

As shown in FIG. 5, the magnetostrictive sensor 5 includes the magnetostrictive member 51, the coil portion 52, and a coil bobbin 53.

The magnetostrictive member 51 is formed on the surface of the thermally sprayed portion 821. Examples of magnetostrictive materials for the magnetostrictive member 51 include iron-cobalt based alloys, iron-nickel based alloys, and nickel-based ferrite.

The coil bobbin 53 is fixed to the housing 2. The coil bobbin 53 is disposed behind the bearing 16. The coil portion 52 includes one or more coils wound around the coil bobbin 53. The coil portion 52 surrounds the magnetostrictive member 51.

When torque is applied to the output block 8, stain is caused in the thermally sprayed portion 821 of the output block 8, and strain is also caused in the magnetostrictive member 51 accordingly. The magnetostrictive sensor 5 makes the coil portion 52 detect a variation in the permeability of the magnetostrictive member 51 due the strain caused in the magnetostrictive member 51 upon the application of the torque to the output block 8, and outputs, as a result of detection, a voltage signal proportional to the strain.

The circuit section 6 (see FIG. 4) includes, for example, a board and an electric circuit mounted on the board. The circuit section 6 is electrically connected to the coil portion 52. The circuit section 6 allows a current to flow through the coil portion 52. In addition, the circuit section 6 measures the strain of the output block 8. That is to say, the circuit section 6 acquires a voltage signal, which is proportional to the strain caused in the output block 8 and the magnetostrictive member 51, from the coil portion 52 and calculates the strain of the output block 8 based on the voltage signal.

### (2) Manufacturing method

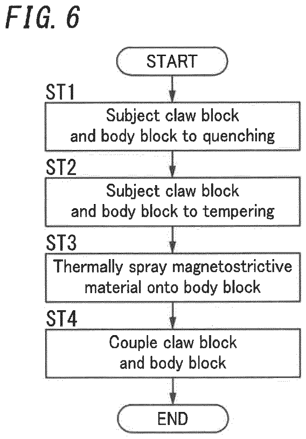

Next, a method for manufacturing the output block 8 will be described with reference to FIG. 6. Note that the flowchart shown in FIG. 6 shows only an exemplary procedure of the manufacturing method according to the present disclosure. Thus, the processing steps shown in FIG. 6 may be performed in a different order as appropriate, an additional processing step may be performed as needed, or at least one of the processing steps shown in FIG. 6 may be omitted as appropriate.

First, quenching treatment is conducted on the claw block 81 and body block 82 that have been molded (in Step ST1). Next, tempering treatment is conducted on the claw block 81 and the body block 82 (in Step ST2). The quenching temperature in the quenching treatment is higher than the tempering temperature in the tempering treatment.

Next, a magnetostrictive material is thermally sprayed onto the thermally sprayed portion 821 of the body block 82 (in Step ST3). Specifically, a film of the magnetostrictive material is formed on the surface of the thermally sprayed portion 821 by spraying and solidifying a heated magnetostrictive material onto the thermally sprayed portion 821. This film is the magnetostrictive member 51 (see FIG. 5). The surface temperature of the body block 82 while the magnetostrictive material is being thermally sprayed thereto is lower than the quenching temperature. Also, the surface temperature of the body block 82 while the magnetostrictive material is being thermally sprayed thereto is higher than the tempering temperature.

Next, the claw block 81 and the body block 82 are coupled to each other (in Step ST4). More specifically, the second coupling portion 822 of the body block 82 is inserted into the first coupling portion 811 of the claw block 81 by press fitting.

The output block 8 is manufactured by performing these process steps.

In the process step of thermally spraying the magnetostrictive material, the member as a target onto which the magnetostrictive material is sprayed comes to have so high a temperature that annealing could occur to cause a decline in the mechanical strength of that member. Thus, in this embodiment, the claw block 81 and the body block 82 are provided as two separate members and the process step of thermally spraying the magnetostrictive material includes spraying the magnetostrictive material onto only the body block 82. This enables avoiding causing a decline in the mechanical strength of the claw block 81. In particular, the claw block 81 includes (two) anvil claws 812 to collide against the hammer 9, and therefore, is required to have higher mechanical strength than the body block 82. This embodiment enables ensuring sufficient mechanical strength for the claw block 81 and thereby increasing the reliability of the impact tool 1.

In addition, this also enables reducing, in a situation where the surface of the output block 8 has been subjected to carburizing treatment, the chances of the carburized layer on the surface of the claw block 81 changing its properties due to the heat in the process step of thermally spraying the magnetostrictive material.

Also, if the body block 82 were subjected to the quenching treatment after the magnetostrictive material has been thermally sprayed thereto, then the quenching treatment could alter the properties of the magnetostrictive member 51 and impair the magnetostrictive sensor's 5 capability of detecting the strain of the output block 8. In contrast, this embodiment allows the magnetostrictive sensor 5 to maintain its capability by thermally spraying the magnetostrictive material onto the body block 82 after the quenching treatment.

As can be seen, a method for manufacturing an output block 8 according to this embodiment is designed to manufacture an output block 8 for use in an impact tool 1 to hold a tip tool thereon. This manufacturing method includes a first step (step ST1) including subjecting a claw block 81, including anvil claws 812, to quenching treatment. This manufacturing method further includes a second step (step ST3) including thermally spraying a magnetostrictive material onto a surface of a thermally sprayed portion 821 that forms a predetermined part of the body block 82 and thereby forming a magnetostrictive member 51 on the surface. This manufacturing method further includes a third step (step ST4) including coupling the body block 82 and the claw block 81 to each other. The third step is performed after the first step and the second step have been performed. More specifically, it is not until not only the quenching treatment in the first step but also the tempering treatment are finished that the third step is performed.

### (Variations of first embodiment)

Next, variations of the first embodiment will be enumerated one after another. The variations to be described below may be adopted in combination as appropriate.

The output block 8 may have another structure to be coupled to either the chuck or the tip tool instead of, or in addition to, the through hole 8230.

In the first embodiment described above, the claw block 81 and the body block 82 are coupled to each other with the body block 82 inserted inside the claw block 81. However, this is only an example and should not be construed as limiting. Alternatively, the claw block 81 and the body block 82 may be coupled to each other with the claw block 81 inserted inside the body block 82. Still alternatively, the claw block 81 and the body block 82 may also be coupled to each other in some way other than insertion. For example, the claw block 81 and the body block 82 may also be coupled to each other by having a projection, extending from one member selected from the group consisting of the claw block 81 and the body block 82, held by the other member selected from the claw block 81 and the body block 82.

The first coupling portion 811 and the second coupling portion 822 do not have to have a spline shape. For example, the first coupling portion 811 and the second coupling portion 822 may be coupled to each other by inserting the second coupling portion 822 having a circular columnar shape in appearance into the first coupling portion 811 having a circular cylindrical shape.

The number of the anvil claws 812 provided does not have to be two but may also be one or three or more. Likewise, the number of the hammer claws 95 provided does not have to be two but may also be one or three or more.

The process step of conducting quenching treatment on the body block 82 is not an essential process step for the method for manufacturing the output block 8.

### (Second embodiment)

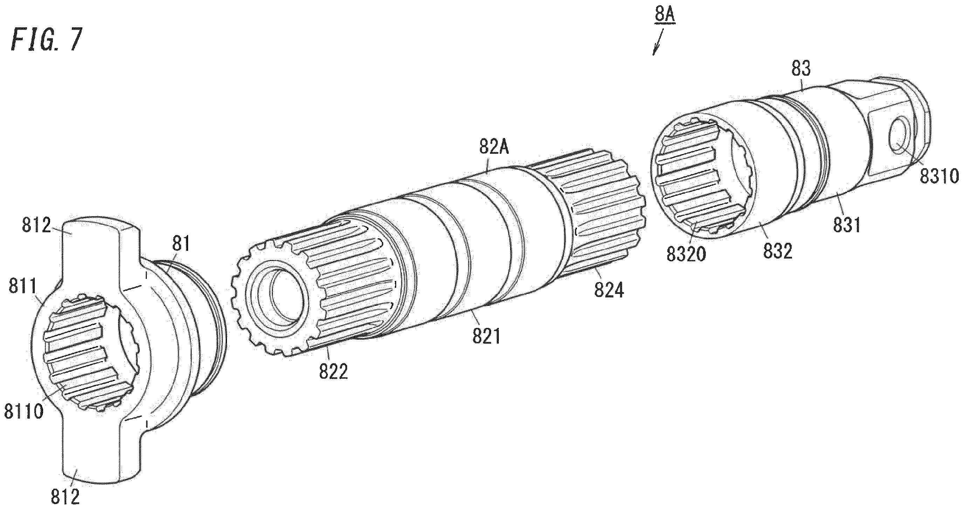

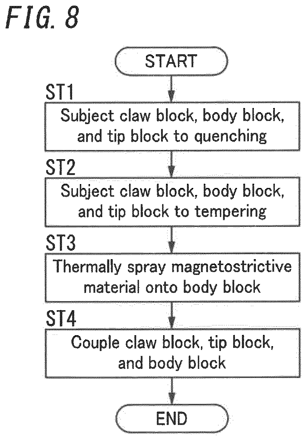

Next, an output block 8A of an impact tool according to a second embodiment will be described with reference to FIGS. 7 and 8. In the following description, any constituent element of this second embodiment, having the same function as a counterpart of the first embodiment described above, will be designated by the same reference numeral as that counterpart's, and description thereof will be omitted herein.

### (1) Structure

As shown in FIG. 7, an output block 8A according to this embodiment further includes a tip block 83. The tip block 83 holds a tip tool thereon. The tip block 83 is to be coupled to a body block 82A. The tip block 83 has been subjected to quenching treatment.

That is to say, the output block 8A includes the claw block 81, the body block 82A, and the tip block 83. The claw block 81 has the same configuration as its counterpart of the first embodiment described above.

The body block 82A includes the thermally sprayed portion 821, the second coupling portion 822, and a third coupling portion 824. The tip block 83 includes a tip portion 831 and a fourth coupling portion 832.

The axis of the thermally sprayed portion 821 is aligned with the forward/backward direction. A first end (rear end) of the thermally sprayed portion 821 is connected to the second coupling portion 822. A second end (front end) of the thermally sprayed portion 821 is connected to the third coupling portion 824.

The third coupling portion 824 is coupled to the fourth coupling portion 832. The third coupling portion 824 is a spline shaft to be fitted into a groove portion 8320 of the fourth coupling portion 832. The third coupling portion 824 has a generally circular columnar shape. When taken along a plane intersecting at right angles with the center axis of the third coupling portion 824, the third coupling portion 824 has a gear shape.

The tip block 83 has a circular columnar shape in appearance. The tip portion 831 of the tip block 83 has a configuration corresponding to that of the tip portion 823 according to the first embodiment. The tip portion 831 has a circular columnar shape in appearance. The tip portion 831 is to be coupled to a tip tool via a chuck. The tip portion 831 has a through hole 8310 to be coupled to the chuck.

The fourth coupling portion 832 has a circular cylindrical shape. That is to say, the fourth coupling portion 832 has an opening as its center hole. The fourth coupling portion 832 is a boss having an opening, of which the inner surface has a gear-shaped groove portion 8320 to be fitted into a spline shaft (third coupling portion 824). The tip portion 831 and the fourth coupling portion 832 are connected to each other in the forward/backward direction.

The body block 82A is coupled to the tip block 83. More specifically, the third coupling portion 824 of the body block 82A is inserted into the opening as the center hole of the fourth coupling portion 832 and fitted into the groove portion 8320. In this manner, the third coupling portion 824 is coupled to the fourth coupling portion 832. That is to say, the body block 82A is coupled to the tip block 83. As a result, the tip portion 831 protrudes forward from the body block 82A.

The body block 82A and the tip block 83 are preferably coupled to each other by press fitting. This may reduce the backlash between the body block 82A and the tip block 83.

In addition, the body block 82A is also coupled to the claw block 81 in the same way as in the first embodiment described above.

### (2) Manufacturing method

Next, a method for manufacturing the output block 8A will be described with reference to FIG. 8. Note that the flowchart shown in FIG. 8 shows only an exemplary procedure of the manufacturing method according to the present disclosure. Thus, the processing steps shown in FIG. 8 may be performed in a different order as appropriate, an additional processing step may be performed as needed, or at least one of the processing steps shown in FIG. 8 may be omitted as appropriate.

First, quenching treatment is conducted on the claw block 81, body block 82A, and tip block 83 that have been molded (in Step ST1). Next, tempering treatment is conducted on the claw block 81, the body block 82, and the tip block 83 (in Step ST2). The quenching temperature in the quenching treatment is higher than the tempering temperature in the tempering treatment.

Next, a magnetostrictive material is thermally sprayed onto the thermally sprayed portion 821 of the body block 82A (in Step ST3). The surface temperature of the body block 82A while the magnetostrictive material is being thermally sprayed thereto is lower than the quenching temperature. Also, the surface temperature of the body block 82A while the magnetostrictive material is being thermally sprayed thereto is higher than the tempering temperature.

Next, the claw block 81 and the body block 82A are coupled to each other and the tip block 83 and the body block 82A are also coupled to each other (in Step ST4). More specifically, the second coupling portion 822 of the body block 82A is inserted into the first coupling portion 811 of the claw block 81 by press fitting. In addition, the third coupling portion 824 of the body block 82A is inserted into the fourth coupling portion 832 of the tip block 83 by press fitting.

The output block 8A is manufactured by performing these process steps.

In this embodiment, the body block 82A and the tip block 83 are provided as two separate members and the process step of thermally spraying the magnetostrictive material includes spraying the magnetostrictive material onto only the body block 82A. This enables avoiding causing a decline in the mechanical strength of the tip block 83. In particular, the tip block 83 is configured to hold the tip tool thereon and receive force applied directly from the tip tool, and therefore, is required to have higher mechanical strength than the body block 82A. This embodiment enables ensuring sufficient mechanical strength for the tip block 83 and thereby increasing the reliability of the impact tool 1.

As can be seen, a method for manufacturing an output block 8A according to this embodiment further includes, in addition to the first, second, and third process steps of the method for manufacturing an output block 8 according to the first embodiment, a fourth step including subjecting the tip block 83 to quenching treatment and a fifth step including coupling the body block 82A to the tip block 83. The fifth step is performed after the second step and the fourth step have been performed. More specifically, it is not until not only the quenching treatment in the fourth step but also the tempering treatment are finished that the fifth step is performed. The tip block 83 holds a tip tool thereon. The tip block 83 is to be coupled to the body block 82A.

### (Variations of second embodiment)

Next, variations of the second embodiment will be enumerated one after another. The variations to be described below may be adopted in combination as appropriate. In addition, the variations of the first embodiment described above are also applicable to the second embodiment as appropriate.

In the second embodiment described above, the body block 82A and the tip block 83 are coupled to each other with the body block 82A inserted inside the tip block 83. However, this is only an example and should not be construed as limiting. Alternatively, the body block 82A and the tip block 83 may be coupled to each other with the tip block 83 inserted inside the body block 82A. Still alternatively, the body block 82A and the tip block 83 may also be coupled to each other in some way other than insertion. For example, the body block 82A and the tip block 83 may also be coupled to each other by having a projection, extending from one member selected from the group consisting of the body block 82A and the tip block 83, held by the other member selected from the body block 82A and the tip block 83.

The third coupling portion 824 and the fourth coupling portion 832 do not have to have a spline shape. For example, the third coupling portion 824 and the fourth coupling portion 832 may be coupled to each other by inserting the fourth coupling portion 832 having a circular columnar shape in appearance into the third coupling portion 824 having a circular cylindrical shape.

### (Recapitulation)

The embodiments and their variations described above may be specific implementations of the following aspects of the present disclosure.

An impact tool (1) according to a first aspect includes a motor (3), an output block (8, 8A), a hammer (9), and a magnetostrictive sensor (5). The output block (8, 8A) holds a tip tool thereon. The hammer (9) receives motive power from the motor (3) and collides against the output block (8, 8A). The magnetostrictive sensor (5) includes a magnetostrictive member (51) and a coil portion (52) covering the magnetostrictive member (51). The hammer (9) includes a hammer body (90) and a hammer claw (95) connected to the hammer body (90). The output block (8, 8A) includes a claw block (81) and a body block (82, 82A). The claw block (81) includes an anvil claw (812), against which the hammer claw (95) collides. The claw block (81) has been subjected to quenching treatment. The body block (82, 82A) includes a thermally sprayed portion (821) and is coupled to the claw block (81). The thermally sprayed portion (821) includes, on a surface thereof, the magnetostrictive member (51) made of a magnetostrictive material.

This configuration enables forming a magnetostrictive member (51) on the thermally sprayed portion (821) of the body block (82, 82A) and increasing the impact resistance of the claw block (81) by quenching treatment at the same time. That is to say, this enables providing an impact tool (1) including a magnetostrictive sensor (5) and an output block (8, 8A), of which the mechanical strength is increased sufficiently for the output block (8, 8A) to withstand the impact caused by an impact operation.

In an impact tool (1) according to a second aspect, which may be implemented in conjunction with the first aspect, the output block (8A) further includes a tip block (83). The tip block (83) holds the tip tool thereon. The tip block (83) is coupled to the body block (82A). The tip block (83) has been subjected to the quenching treatment.

This configuration enables increasing the mechanical strength of not only the claw block (81) but also the tip block (83) as well.

In an impact tool (1) according to a third aspect, which may be implemented in conjunction with the second aspect, the body block (82A) and the tip block (83) are coupled to each other by press fitting.

This configuration may reduce the backlash between the body block (82A) and the tip block (83), thus cutting down the energy transfer loss between the body block (82A) and the tip block (83).

In an impact tool (1) according to a fourth aspect, which may be implemented in conjunction with any one of the first to third aspects, the body block (82, 82A) and the claw block (81) are coupled to each other by press fitting.

This configuration may reduce the backlash between the body block (82, 82A) and the claw block (81), thus cutting down the energy transfer loss between the body block (82, 82A) and the claw block (81). In addition, this also makes it easier to express the impact received by the claw block (81) as a strain of the magnetostrictive member (51), thus contributing to increasing the sensitivity of the magnetostrictive sensor (5).

Note that the constituent elements according to the second to fourth aspects are not essential constituent elements for the impact tool (1) but may be omitted as appropriate.

A method for manufacturing an output block (8, 8A) according to a fifth aspect is designed to manufacture an output block (8, 8A) for use in an impact tool (1) to hold a tip tool thereon. The output block (8, 8A) includes: a claw block (81) including an anvil claw (812); and a body block (82, 82A). The method includes a first step, a second step, and a third step. The first step includes subjecting the claw block (81), to quenching treatment. The second step includes thermally spraying a magnetostrictive material onto a surface of a thermally sprayed portion (821) that forms a predetermined part of the body block (82, 82A) and thereby forming a magnetostrictive member (51) on the surface. The third step includes coupling the body block (82, 82A) and the claw block (81) to each other after the first step and the second step have been performed.

This method enables providing an impact tool (1) including a magnetostrictive sensor (5) and an output block (8, 8A), of which the mechanical strength is increased sufficiently for the output block (8, 8A) to withstand the impact caused by an impact operation.

In a method for manufacturing an output block (8A) according to a sixth aspect, which may be implemented in conjunction with the fifth aspect, the output block (8A) further includes a tip block (83). The tip block (83) holds the tip tool thereon and is to be coupled to a body block (82A). The method further includes: a fourth step including subjecting the tip block (83) to the quenching treatment; and a fifth step including coupling the body block (82A) to the tip block (83) after the second step and the fourth step have been performed.

This method enables increasing the mechanical strength of not only the claw block (81) but also the tip block (83) as well.

### Reference Signs List

- 1: Impact Tool
- 3: Motor
- 5: Magnetostrictive Sensor
- 8, 8A: Output Block
- 9: Hammer
- 51: Magnetostrictive Member
- 52: Coil Portion
- 81: Claw Block
- 82, 82A: Body Block
- 83: Tip Block
- 90: Hammer Body
- 95: Hammer Claw
- 812: Anvil Claw
- 821: Thermally Sprayed Portion

## Claims

1. An impact tool (1) comprising:
a motor (3);
an output block (8, 8A) configured to hold a tip tool thereon;
a hammer (9) configured to receive motive power from the motor (3) and collide against the output block (8,8A); and
a magnetostrictive sensor (5) including: a magnetostrictive member (51); and a coil portion (52) covering the magnetostrictive member (51),
the hammer (9) including: a hammer body (90); and a hammer claw (95) connected to the hammer body (90),
2. **characterised in that** the output block (8, 8A) includes:
a claw block (81) including an anvil claw (812), against which the hammer claw (95) collides, and subjected to quenching treatment; and
a body block (82, 82A) including a thermally sprayed portion (821) and coupled to the claw block (81), the thermally sprayed portion (821) including, on a surface thereof, the magnetostrictive member (51) made of a magnetostrictive material.

2. The impact tool (1) of claim 1, wherein
the output block (8A) further includes a tip block (83) configured to hold the tip tool thereon and coupled to the body block (82A),
the tip block (83) having been subjected to the quenching treatment.

3. The impact tool (1) of claim 2, wherein
the body block (82A) and the tip block (83) are coupled to each other by press fitting.

4. The impact tool (1) of any one of claims 1-3, wherein
the body block (82, 82A) and the claw block (81) are coupled to each other by press fitting.

5. A method for manufacturing an output block (8, 8A) for use in an impact tool (1) to hold a tip tool thereon, **characterised in that** the output block (8, 8A) includes: a claw block (81) including an anvil claw (812); and a body block (82, 82A), the method comprising:
a first step including subjecting the claw block (81) to quenching treatment;
a second step including thermally spraying a magnetostrictive material onto a surface of a thermally sprayed portion (821) that forms a predetermined part of the body block (82, 82A) and thereby forming a magnetostrictive member (51) on the surface; and
a third step including coupling the body block (82, 82A) and the claw block (81) to each other after the first step and the second step have been performed.

6. The method of claim 5, wherein
the output block (8A) further includes a tip block (83) configured to hold the tip tool thereon and be coupled to the body block (82A),
the method further comprises:
a fourth step including subjecting the tip block (83) to the quenching treatment; and
a fifth step including coupling the body block (82A) to the tip block (83) after the second step and the fourth step have been performed.

## Patentansprüche

1. Schlagwerkzeug (1), aufweisend:
einen Motor (3);
einen Ausgabeblock (8, 8A), der derart konfiguriert ist, dass er ein Spitzenwerkzeug daran hält;
einen Hammer (9), welcher derart konfiguriert ist, dass er eine Antriebskraft von dem Motor (3) aufnimmt und mit dem Ausgabeblock (8, 8A) kollidiert; und
einen magnetostriktiven Sensor (5) mit: einem magnetostriktiven Element (51); und einem Spulenabschnitt (52), der das magnetostriktive Element (51) bedeckt,
wobei der Hammer (9) aufweist: einen Hammerkörper (90); und eine Hammerklaue (95), die mit dem Hammerkörper (90) verbunden ist,
**dadurch gekennzeichnet, dass** der Ausgabeblock (8, 8A) aufweist:
einen Klauenblock (81) mit einer Ambossklaue (812), mit der die Hammerklaue (95) kollidiert, und der einer Härtungsbehandlung unterzogen wird; und
einen Körperblock (82, 82A), der einen thermisch gespritzten Abschnitt (821) aufweist und mit dem Klauenblock (81) gekoppelt ist, wobei der thermisch gespritzte Abschnitt (821) an einer Oberfläche desselben das magnetostriktive Element (51) aufweist, das aus einem magnetostriktiven Material hergestellt ist.

2. Schlagwerkzeug (1) nach Anspruch 1, wobei
der Ausgabeblock (8A) ferner einen Spitzenblock (83) aufweist, welcher derart konfiguriert ist, dass er das Spitzenwerkzeug daran hält, und der mit dem Körperblock (82A) gekoppelt ist,
wobei der Spitzenblock (83) der Härtebehandlung unterzogen wurde.

3. Schlagwerkzeug (1) nach Anspruch 2, wobei
der Körperblock (82A) und der Spitzenblock (83) durch Presspassung aneinander gekoppelt sind.

4. Schlagwerkzeug (1) nach einem der Ansprüche 1-3, wobei
der Körperblock (82, 82A) und der Klauenblock (81) durch Presspassung aneinander gekoppelt sind.

5. Verfahren zur Herstellung eines Ausgabeblocks (8, 8A) zur Verwendung in einem Schlagwerkzeug (1), um ein Spitzenwerkzeug daran zu halten, **dadurch gekennzeichnet, dass** der Ausgabeblock (8, 8A) aufweist: einen Klauenblock (81) mit einer Ambossklaue (812); und einen Körperblock (82, 82A), wobei das Verfahren umfasst:
einen ersten Schritt, der das Unterziehen des Krallenblocks (81) einer Härtungsbehandlung umfasst;
einen zweiten Schritt, der das thermische Spritzen eines magnetostriktiven Materials auf eine Oberfläche eines thermisch gespritzten Abschnitts (821) umfasst, der einen vorbestimmten Abschnitt des Körperblocks (82, 82A) bildet und dadurch ein magnetostriktives Element (51) auf der Oberfläche bildet; und
einen dritten Schritt, der das Aneinanderkoppeln des Körperblocks (82, 82A) und des Klauenblocks (81) umfasst, nachdem der erste Schritt und der zweite Schritt durchgeführt wurden.

6. Verfahren nach Anspruch 5, wobei
der Ausgabeblock (8A) ferner einen Spitzenblock (83) aufweist, der derart konfiguriert ist, dass er das Spitzenwerkzeug daran hält und mit dem Körperblock (82A) gekoppelt ist,
das Verfahren ferner umfasst:
einen vierten Schritt, der das Unterziehen des Spitzenblocks (83) einer Härtungsbehandlung umfasst; und
einen fünften Schritt, der das Koppeln des Körperblocks (82A) an den Spitzenblock (83) umfasst, nachdem der zweite Schritt und der vierte Schritt durchgeführt wurden.

## Revendications

1. Outil à percussion (1) comprenant :
un moteur (3) ;
un bloc de sortie (8, 8A) configuré pour maintenir un outil de pointe sur celui-ci ;
un marteau (9) configuré pour recevoir une force motrice du moteur (3) et entrer en collision contre le bloc de sortie (8, 8A) ; et
un capteur magnétostrictif (5) comportant : un élément magnétostrictif (51) ; et une partie bobine (52) couvrant l'élément magnétostrictif (51),
le marteau (9) comportant : un corps de marteau (90) ; et une griffe de marteau (95) raccordée au corps de marteau (90),
**caractérisé en ce que** le bloc de sortie (8, 8A) comporte :
un bloc de griffe (81) comportant une griffe d'enclume (812), contre laquelle la griffe de marteau (95) entre en collision, et soumise à un traitement de trempe ; et
un bloc de corps (82, 82A) comportant une partie pulvérisée thermiquement (821) et accouplée au bloc de griffe (81), la partie pulvérisée thermiquement (821) comportant, sur une surface de celle-ci, l'élément magnétostrictif (51) composé d'un matériau magnétostrictif.

2. Outil à percussion (1) selon la revendication 1, dans lequel
le bloc de sortie (8A) comporte en outre un bloc de pointe (83) configuré pour maintenir l'outil de pointe sur celui-ci et accouplé au bloc de corps (82A),
le bloc de pointe (83) ayant été soumis au traitement de trempe.

3. Outil à percussion (1) selon la revendication 2, dans lequel
le bloc de corps (82A) et le bloc de pointe (83) sont accouplés l'un à l'autre par ajustement à la presse.

4. Outil à percussion (1) selon l'une quelconque des revendications 1-3, dans lequel
le bloc de corps (82, 82A) et le bloc de griffe (81) sont accouplés l'un à l'autre par ajustement à la presse.

5. Procédé de fabrication d'un bloc de sortie (8, 8A) destiné à être utilisé dans un outil à percussion (1) pour maintenir un outil de pointe sur celui-ci, **caractérisé en ce que** le bloc de sortie (8, 8A) comporte : un bloc de griffe (81) comportant une griffe d'enclume (812) ; et un bloc de corps (82, 82A), le procédé comprenant :
une première étape comportant la soumission du bloc de griffe (81) à un traitement de trempe ;
une deuxième étape comportant la pulvérisation thermique d'un matériau magnétostrictif sur une surface d'une partie pulvérisée thermiquement (821) qui forme une partie prédéterminée du bloc de corps (82, 82A) et formant ainsi un élément magnétostrictif (51) sur la surface ; et
une troisième étape comportant l'accouplement du bloc de corps (82, 82A) et du bloc de griffe (81) l'un à l'autre après que la première étape et la deuxième étape ont été réalisées.

6. Procédé selon la revendication 5, dans lequel
le bloc de sortie (8A) comporte en outre un bloc de pointe (83) configuré pour maintenir l'outil de pointe sur celui-ci et être accouplé au bloc de corps (82A),
le procédé comprend en outre :
une quatrième étape comportant la soumission du bloc de pointe (83) au traitement de trempe ; et
une cinquième étape comportant l'accouplement du bloc de corps (82A) au bloc de pointe (83) après que la deuxième étape et la quatrième étape ont été réalisées.
